# EUROPÄISCHE PATENTANMELDUNG

(11) **EP 4 681 847 A1**
(43) Veröffentlichungstag der Anmeldung: **21.01.2026**
(21) Anmeldenummer: 24189221.5
(22) Anmeldetag: 17.07.2024
(51) Int. Cl.: B22F 10/62, B22F 10/66, B33Y 40/20, C23F 1/28, C23F 1/44, B81C 1/00, B23D 57/00

(54) **VERFAHREN UND VORRICHTUNG ZU CHEMISCHEM ENTGRATEN**

(71) Anmelder: AM Global Holding GmbH, 82319 Starnberg (DE)
(72) Erfinder: Winderlich, Matthias, 09337 Hohenstein-Ernstthal (DE); Zierhut, Nel, 41464 Neuss (DE)

(57) **Zusammenfassung**

Die Erfindung betrifft ein Verfahren, umfassend ein Entfernen von Metall von einer Oberfläche eines additiv gefertigten, metallischen Bauteils unter Verwendung einer Mischung, die eine Säure und ein Oxidationsmittel enthält, sowie ein Bauteil, erhältlich durch das Verfahren. Die Erfindung betrifft ferner eine Vorrichtung zum Entfernen von Metall von einer Oberfläche eines additiv gefertigten, metallischen Bauteils sowie die Verwendung einer Mischung, die eine Säure und ein Oxidationsmittel enthält, zum Entfernen von Grat und/oder Pulverrückstand von einem additiv gefertigten, metallischen Bauteil.

## Beschreibung

Die vorliegende Erfindung betrifft ein Verfahren, umfassend ein Entfernen von Metall von einer Oberfläche eines additiv gefertigten, metallischen Bauteils unter Verwendung einer Mischung, die eine Säure und ein Oxidationsmittel enthält, sowie ein Bauteil, erhältlich durch das Verfahren. Die Erfindung betrifft ferner eine Vorrichtung zum Entfernen von Metall von einer Oberfläche eines metallischen Bauteils sowie die Verwendung einer Mischung, die eine Säure und ein Oxidationsmittel enthält, zum Entfernen von Grat und/oder Pulverrückstand von einem metallischen Bauteil.

Die DE 199 11 381 A1 beschreibt ein Verfahren zum Behandeln von Werkstücken aus unlegiertem und/oder niedrig legiertem Stahl zwecks Feinentgratung und/oder Glättung von Kanten und Flächen.

Die vorliegende Erfindung wurde auf dem Gebiet der additiven Fertigung getätigt. Auf diesem eröffnet das Erodieren oder Drahtschneiden (z.B. Multi-Drahtschneiden) eines additiv gefertigten, metallischen Körpers interessante Möglichkeiten zur effizienten Herstellung einer Vielzahl von Bauteilen in hoher Geschwindigkeit.

Verfahren und Vorrichtungen zum Drahtschneiden unter Verwendung einer Drahtsäge sind bekannt. Beispielsweise betrifft die DE 10 2012 101 251 A1 ein Verfahren und eine Drahtsäge zum Abtrennen einer Mehrzahl von Halbleiterscheiben von einem Halbleitermaterial-Rohblock. Die DE 10 2012 101 251 A1 beschreibt, wie zur Bildung einer Drahtgruppe ein sich bewegender Draht mit einer tribologischen Paste (sog. "Slurry") um eine Mehrzahl von mit Nuten versehenen Walzen läuft, wobei die Drahtgruppe eine Mehrzahl von parallel zueinander verlaufenden und eine Ebene aufspannenden Teilabschnitten des sich bewegenden Drahtes umfasst, wobei Teile eines Rohblocks durch Relativbewegung des Rohblocks und der Drahtgruppe mit der tribologischen Paste (sog. "Slurry") abgetrennt werden (auch Multi Wire Cutting (MWC) oder Multi-Drahtschneiden genannt).

Halbleiter unterscheiden sich in ihre Struktur und ihren Eigenschaften von Metallen.

Durch das Abtrennen einzelner Teile von einem additiv gefertigten, metallischen Körper mittels Erodieren oder Drahtschneiden entsteht meist ein Grat, insbesondere Flittergrat, an sämtlichen Wandungen des Bauteils, inklusive Schneidflächen. Je nach Orientierung des Trennschnittes zur internen Bauteilgeometrie bzw. internen Bauteilwandungen kann der Flittergrad reduziert, jedoch nicht ganz abgestellt werden. Ferner kann an den Oberflächen des additiv gefertigten, metallischen Körpers beziehungsweise Bauteils Pulverrückstand haften. Grat, insbesondere Flittergrat, und Pulverrückstand verschlechtern die Homogenität und Eigenschaften des Produktes.

Beispielsweise können mittels additiver Fertigung und Erodieren oder Drahtschneiden, insbesondere Multi-Drahtschneiden, metallische Flachelemente hergestellt werden, die als Vorheizelemente, insbesondere Automobilabgasvorheizelemente, und chemische Katalysatoren verwendet werden können. Automobilabgasvorheizelemente können Automobilabgase unmittelbar nach dem Starten des Automobils auf eine Temperatur erwärmen, bei der der Abgaskatalysator seine Wirkung entfalten kann. Grat und Pulverrückstände beeinflussen Fluidströme und Wärmeleitung in ungewünschter Weise(?) und führen zu inhomogenen Produkten. Aufgrund einer möglichen Störung des Abgassystems muss der Flittergrad und sonstige durch den additiven Fertigungsprozess anhaftenden Metallpulverpartikel durch eine Reinigung entfernt werden.

Der vorliegenden Erfindung liegt als eine Aufgabe zu Grunde, ein Verfahren bereitzustellen, mit dem Grat, insbesondere Flittergrat, und Pulverrückstand schnell, sicher und effizient von einer Oberfläche eines additiv gefertigten, metallischen Bauteils entfernt werden kann. Eine weitere Aufgabe der vorliegenden Erfindung liegt darin, ein erfindungsgemäß hergestelltes Bauteil anzugeben. Eine weitere Aufgabe der vorliegenden Erfindung liegt darin, eine Vorrichtung zum Entfernen von Grat, insbesondere Flittergrat, und Pulverrückstand von einer Oberfläche eines additiv gefertigten, metallischen Bauteils anzugeben.

Erfindungsgemäß kann zumindest eine Aufgabe der vorliegenden Erfindung zumindest nach einem Verfahren nach Anspruch 1 gelöst werden, also durch ein Verfahren, umfassend ein Entfernen von Metall von einer Oberfläche eines additiv gefertigten, metallischen Bauteils unter Verwendung einer Mischung, die eine Säure, bevorzugt Salzsäure, und ein Oxidationsmittel, bevorzugt Wasserstoffperoxid, enthält.

Das erfindungsgemäße Entfernen von Metall von einer Oberfläche eines additiv gefertigten, metallischen Bauteils unter Verwendung einer Mischung, die eine Säure und ein Oxidationsmittel enthält, kann auch als "Entgraten" oder "chemisches Entgraten" bezeichnet werden.

Die Erfinder haben festgestellt, dass das erfindungsgemäße Reinigungsverfahren die Entfernung des Flittergrades und weiterer Anhaftungen in kurzer Zeit bei geringen Kosten und niedrigem Gefahrenpotenzial ermöglicht.

Der metallische Körper ist ein additiv gefertigter, metallischer Körper. Additive Fertigung metallischer Körper ist effektiv und effizient, weil über einen additiv gefertigten, metallischen Körper eine große Vielfalt komplexer Formen erreicht werden können. Insbesondere weisen Flachelemente für Vorheizsysteme häufig komplexe, feine Strukturen auf, um eine große Kontaktfläche zum Wärmeaustausch zu bieten. Pulverrückstände, die an additiv gefertigten Produkten haften, können durch das erfindungsgemäße Verfahren schnell und effizient entfernt werden.

Das Entfernen von Metall, insbesondere von Grat und Pulverrückständen, kann eine Reinigung darstellen, die eine Fluidzirkulation und Wärmeleitung durch das Bauteil verbessern kann. Insbesondere wird die Homogenität und Reinheit des Bauteils verbessert.

Das additiv gefertigte, metallische Bauteil ist ein metallisches Bauteil. Dies bedeutet vorzugsweise, dass das metallische Bauteil im Wesentlichen aus mindestens einem Metall ausgewählt aus Übergangsmetallen und Metallen sowie deren Oxiden, Nitriden, Halogeniden, Phosphor- und Schwefelverbindungen besteht.

Ausführungsformen innerhalb dieser Schrift können beliebig miteinander kombiniert werden, sofern sich aus dem Gegenstand und der Beschreibung der Ausführungsformen nicht eindeutig Gegenteiliges ergibt.

Die Verben "enthalten" und "umfassen" und ihre Konjugationen umfassen auch das Verb "bestehen aus" mit seinen Konjugationen.

Bevorzugte Ausführungsformen sind auch in den Ansprüchen wiedergegeben.

Vorzugsweise ist die Säure Salzsäure oder umfasst Salzsäure.

Vorzugsweise ist das Oxidationsmittel Peroxid, vorzugsweise Wasserstoffperoxid, oder umfasst Peroxid, vorzugsweise Wasserstoffperoxid.

Vorzugsweise enthält die Mischung mindestens 25 Gew.-%, bevorzugt mindestens 45%, weiter bevorzugt mindestens 65%, besonders bevorzugt 85 Gew.-% Wasser.

Vorzugsweise enthält die Mischung Salzsäure und Peroxid, vorzugsweise Salzsäure und Wasserstoffperoxid.

Vorzugsweise beträgt in der Mischung das Verhältnis von Salzsäure:Wasserstoffperoxid bezogen auf Gew.-% 1:2, weiter bevorzugt 1:1, besonders bevorzugt 2:1.

Vorzugsweise erfolgt das Entfernen von Metall von der Oberfläche des additiv gefertigten, metallischen Bauteils bei einer Temperatur der Mischung von mindestens 5°C, bevorzugt mindestens 10°C, weiter bevorzugt mindestens 15 °C, besonders bevorzugt mindestens 20°C, bis höchstens 80°C, bevorzugt bis höchstens 60°C, weiter bevorzugt bis höchstens 40°C.

Vorzugsweise erfolgt das Entfernen von Metall durch Eintauchen des additiv gefertigten, metallischen Bauteils in die Mischung, die eine Säure und ein Oxidationsmittel enthält, oder durch ein Bespritzen des additiv gefertigten, metallischen Bauteils mit der Mischung.

Das Eintauchen in diese Mischung oder das Bespritzen mit der Mischung führt zu einer besonders schnellen und effizienten Reinigung.

Vorzugsweise erfolgt das Entfernen von Metall in einem Zeitraum zwischen 2 Sekunden und 4 Minuten. Vorzugsweise erfolgt das Entfernen von Metall in einem Zeitraum von mindestens 2 Sekunden, bevorzugt mindestens 4 Sekunden, weiter bevorzugt mindestens 7 Sekunden, besonders bevorzugt mindestens 10 Sekunden, bis höchstens 10 Minuten, bevorzugt höchstens 4 Minuten, weiter bevorzugt höchstens 1 oder 2 Minuten.

In einer bevorzugten Ausführungsform wird das additiv gefertigte, metallische Bauteil für einen Zeitraum zwischen 2 Sekunden und 4 Minuten in die Mischung, die eine Säure und ein Oxidationsmittel enthält, eingetaucht. Vorzugsweise erfolgt das Eintauchen über einen Zeitraum von mindestens 2 Sekunden, bevorzugt mindestens 4 Sekunden, weiter bevorzugt mindestens 7 Sekunden, besonders bevorzugt mindestens 10 Sekunden, bis höchstens 10 Minuten, bevorzugt höchstens 4 Minuten, weiter bevorzugt höchstens 1 oder 2 Minuten.

Durch das erfindungsgemäße Verfahren kann das Bauteil schnell und effizient gereinigt werden.

Vorzugsweise umfasst das Entfernen von Metall das Entfernen von Grat und/oder Pulverrückstand. Der Grat umfasst insbesondere Flittergrat. Mit anderen Worten, in einer bevorzugten Ausführungsform umfasst das Entfernen von Metall das Entfernen von Flittergrat und/oder Pulverrückstand.

Diese Verunreinigungen aus dem Erodieren oder Drahtschneiden und der additiven Fertigung können durch das erfindungsgemäße Verfahren schnell und effizient entfernt werden.

Vorzugsweise umfasst die Oberfläche eine Schneidfläche, die durch ein Erodieren oder Drahtschneiden, vorzugsweise Multi-Drahtschneiden, eines additiv gefertigten, metallischen Körpers hergestellt wurde. Vorzugsweise werden Kanten an der Schneidfläche durch das Entfernen von Metall unter Verwendung der Mischung, die eine Säure und ein Oxidationsmittel enthält, entschärft.

Durch das Erodieren oder Drahtschneiden entstehen Schneideflächen mit Grat, insbesondere Flittergrat, die durch das erfindungsgemäße Verfahren schnell und effizient gereinigt werden können. Für die Weiterverarbeitung und viele Anwendungen ist es vorteilhaft, wenn Kanten an der Schneidfläche entschärft werden.

Vorzugsweise ist das Bauteil Produkt eines Erodierens oder Drahtschneidens, vorzugsweise Multi-Drahtschneidens, eines additiv gefertigten, metallischen Körpers.

Beim Erodieren oder Drahtschneiden eines additiv gefertigten, metallischen Körpers entsteht Grat, insbesondere Flittergrat, der durch das erfindungsgemäße Verfahren schnell und effizient entfernt werden kann.

In einer bevorzugten Ausführungsform umfasst das Verfahren vor dem Entfernen von Metall von einer Oberfläche des additiv gefertigten, metallischen Bauteils ein Erodieren oder Drahtschneiden, vorzugsweise Multi-Drahtschneiden, eines additiv gefertigten, metallischen Körpers, um das Bauteil herzustellen.

In dieser Ausführungsform umfasst das erfindungsgemäße Verfahren also mindestens zwei Stufen, erst das Erodieren oder Drahtschneiden und danach die Reinigung mittels Gemisch, das ein Oxidationsmittel und eine Säure enthält. Das Verfahren zum Entfernen von Metall von einer Oberfläche eines additiv gefertigten, metallischen Bauteils unter Verwendung einer Mischung, die eine Säure und ein Oxidationsmittel enthält, eignet sich besonders gut in Kombination mit einem Drahtschneiden, vorzugsweise Multi-Drahtschneiden, da so das schnelle und effiziente Abtrennen von Teilen von einem additiv gefertigten, metallischen Körper und die anschließende Reinigung ermöglicht wird. Ermöglicht wird insbesondere ein hochgenaues Heraustrennen einer Vielzahl definierter Teile mit geringer Höhe aus einem vorgegebenen Körper sowie die anschließende Reinigung, sowohl von Rückständen aus der additiven Fertigung als auch von Rückständen aus dem Drahtschneiden.

Wie eingangs beschrieben ist das "Drahtschneiden" dem Fachmann bekannt. In einer bevorzugten Ausführungsform beschreibt der Begriff Drahtschneiden das Schneiden des additiv gefertigten, metallischen Körpers durch ein Drahtfeld aus nebeneinander geführten Drähten. Die Drähte sind dabei vorzugsweise mit einer tribologischen Paste oder Schleifemulsion benetzt.

Der metallische Körper ist ein metallischer Körper. Dies bedeutet vorzugsweise, dass der metallische Körper im Wesentlichen aus mindestens einem Metall ausgewählt aus Übergangsmetallen und Metallen sowie deren Oxiden, Nitriden, Halogeniden, Phosphor- und Schwefelverbindungen besteht.

Vorzugsweise werden beim Drahtschneiden mindestens zwei Teile, vorzugsweise eine Vielzahl von Teilen, simultan von dem additiv gefertigten, metallischen Körper abgetrennt (sogenanntes "Multi-Drahtschneiden"). Eine Vielzahl bezeichnet beispielsweise mindestens drei, bevorzugt mindestens 10, weiter bevorzugt mindestens 25, besonders bevorzugt mindestens 50 Teile. Das Multidrahtschneiden stellt eine zeit- und kostengünstige Alternative zum (Draht-)Erodieren einzelner Teile dar.

In einer bevorzugten Ausführungsform umfasst das Verfahren vor dem Drahtschneiden des metallischen Körpers die additive Fertigung des metallischen Körpers.

In dieser Ausführungsform umfasst das erfindungsgemäße Verfahren also mindestens drei Stufen, erst die additive Fertigung des metallischen Körpers, dann das Erodieren oder Drahtschneiden des additiv gefertigten, metallischen Körpers und danach die Reinigung der erhaltenen Bauteile mittels Gemisch, das ein Oxidationsmittel und eine Säure enthält. Über die additive Fertigung kann eine große Vielfalt komplexer Formen erreicht werden. Insbesondere weisen Flachelemente zur Verwendung als Vorheizelement und/oder als chemischer Katalysator häufig komplexe, feine Strukturen auf, um eine große Kontaktfläche zum Wärmeaustausch und/oder für Reaktionen zu bieten. Pulverrückstände aus der additiven Fertigung können durch das erfindungsgemäße Verfahren schnell und effizient entfernt werden.

In einer bevorzugten Ausführungsform besteht der additiv gefertigte, metallische Körper aus einer Legierung.

In einer bevorzugten Ausführungsform besteht der additiv gefertigte, metallische Körper aus einer Legierung, die mindestens 50 Gew.-% Übergangsmetall enthält.

In einer bevorzugten Ausführungsform besteht der additiv gefertigte, metallische Körper aus einer Legierung, deren Hauptbestandteil bezogen auf Gew.-% Nickel ist.

In einer bevorzugten Ausführungsform enthält der additiv gefertigte, metallische Körper 40 Gew.-% bis 70 Gew.-% Nickel.

In einer bevorzugten Ausführungsform enthält der additiv gefertigte, metallische Körper 10 Gew.-% bis 30 Gew.-% Chrom.

In einer bevorzugten Ausführungsform enthält der additiv gefertigte, metallische Körper 3 Gew.-% bis 15 Gew.-% Molybdän.

In einer bevorzugten Ausführungsform besteht der additiv gefertigte, metallische Körper aus einer Legierung, die 40 Gew.-% bis 70 Gew.% Nickel, 10 Gew.-% bis 30 Gew.-% Chrom und 3 Gew.-% bis 15 Gew.-% Molybdän enthält. Inconel 625 (UNS Bezeichnung N06625), eine Legierung die folgende Zusammensetzung aufweist, ist in einer Ausführungsform besonders bevorzugt:

| Element | Gew.-% |
|---|---|
| Cr | 20,00 - 23,00 |
| Mo | 8,00 - 10,00 |
| Fe | max. 5,0 |
| Nb + Ta | 3,15 - 4,15 |
| Mn | max. 0,50 |
| Si | max. 0,50 |
| Al | max. 0,40 |
| Ti | max. 0,40 |
| C | max. 0,10 |
| Ni | min. 58* |

| | |
|---|---|
| *wobei der Rest Nickel und unvermeidbare Verunreinigungen sind. | |

In einer bevorzugten Ausführungsform besteht der additiv gefertigte, metallische Körper aus Edelstahl, beispielsweise der Legierung 316L.

In einer bevorzugten Ausführungsform erfolgt das Drahtschneiden bzw. Multi-Drahtschneiden unter Verwendung eines Verschleißmittels, z.B. einer tribologischen Paste.

In einer bevorzugten Ausführungsform ist der additiv gefertigte, metallische Körper ein Metallblock mit Gitterstruktur, vorzugsweise mit mäanderförmiger Gitterstruktur. Eine mäanderförmige Gitterstruktur des Grundköpers führt zu einem Produkt mit großer Oberfläche zum Wärmeaustausch. Außerdem kann die mäanderförmige Struktur zu einer Abfederung der Schneidkraft führen. Mit anderen Worten, der additiv gefertigte, metallische Körper ist in einer bevorzugten Ausführungsform derart ausgebildet, dass der metallische Körper während des Drahtschneidens eine Schneidkraft abfedert.

Vorzugsweise ist das Bauteil ein metallisches Flachelement bzw. sind die Bauteile metallische Flachelemente, vorzugsweise zur Verwendung alsVorheizelement, besonders bevorzugt zur Verwendung als ein Automobilabgasvorheizelement, und/oder als chemischer Katalysator. Ein Flachelement ist dadurch gekennzeichnet, dass es in Relation zu seiner Breite und Länge eine geringe Höhe aufweist.. Flachelemente, insbesondere Flachelemente zur Verwendung als Vorheizelement, insbesondere Automobilabgasvorheizelement, und/oder als chemischer Katalysator, weisen eine komplexe und filigrane Struktur auf und werden daher bevorzugt mittels additiver Fertigung und Drahtschneiden, vorzugsweise Multi-Drahtschneiden, gefertigt. Das erfindungsgemäße Verfahren erlaubt die effiziente und schnelle Reinigung.

In einer bevorzugten Ausführungsform besteht das metallische Bauteil aus einer Legierung.

In einer bevorzugten Ausführungsform besteht das metallische Bauteil aus einer Legierung, die mindestens 50 Gew.-% Übergangsmetall enthält.

In einer bevorzugten Ausführungsform besteht das metallische Bauteil aus einer Legierung, deren Hauptbestandteil bezogen auf Gew.-% Nickel ist.

In einer bevorzugten Ausführungsform enthält das metallische Bauteil 40 Gew.-% bis 70 Gew.-% Nickel.

In einer bevorzugten Ausführungsform enthält das metallische Bauteil 10 Gew.-% bis 30 Gew.-% Chrom.

In einer bevorzugten Ausführungsform enthält das metallische Bauteil 3 Gew.-% bis 15 Gew.-% Molybdän.

In einer bevorzugten Ausführungsform besteht das metallische Bauteil aus einer Legierung, die 40 Gew.-% bis 70 Gew.% Nickel, 10 Gew.-% bis 30 Gew.-% Chrom und 3 Gew.-% bis 15 Gew.-% Molybdän enthält. Inconel 625 (UNS Bezeichnung N06625), eine Legierung die folgende Zusammensetzung aufweist, ist in einer Ausführungsform besonders bevorzugt:

| Element | Gew.-% |
|---|---|
| Cr | 20,00 - 23,00 |
| Mo | 8,00 - 10,00 |
| Fe | max. 5,0 |
| Nb + Ta | 3,15 - 4,15 |
| Mn | max. 0,50 |
| Si | max. 0,50 |
| Al | max. 0,40 |
| Ti | max. 0,40 |
| C | max. 0,10 |
| Ni | min. 58* |

| | |
|---|---|
| *wobei der Rest Nickel und unvermeidbare Verunreinigungen sind. | |

In einer bevorzugten Ausführungsform besteht das metallische Bauteil aus Edelstahl, beispielsweise der Legierung 316L.

In einer bevorzugten Ausführungsform weist das Bauteil eine Gitterstruktur, vorzugsweise eine mäanderförmige Gitterstruktur, auf. Diese Form ist für ein Bauteil für ein Vorheizsystem oder für einen chemischen Katalysator besonders geeignet. Gleichzeitig ist bei einer Gitterstruktur eine Reinigung besonders wichtig und kompliziert.

Die vorliegende Erfindung stellt auch ein Bauteil, vorzugsweise ein Flachelement, vorzugsweise ein Flachelement zur Verwendung als Vorheizelement, besonders bevorzugt ein Flachelement zur Verwendung als Automobilabgasvorheizelement, und/oder ein Flachelement zur Verwendung als chemischer Katalysator bereit, wobei das Bauteil durch ein erfindungsgemäßes Verfahren erhältlich ist.

Durch die optionale additive Fertigung und das optionale Drahtschneiden oder Erodieren können die erhaltenen Flachelemente eine besonders komplexe und feine Struktur aufweisen. Durch das Entfernen von Metall von Oberflächen, insbesondere Schneidflächen, mittels Mischung, die eine Säure, bevorzugt Salzsäure, und ein Oxidationsmittel, bevorzugt Wasserstoffperoxid, enthält, wird ein besonders reines, homogenes, feines und leistungsfähiges Produkt erhalten, das durch die stattfindende chemische Reinigung bzw. Behandlung noch modifiziert wird. Vorteilhaft ist z.B., dass scharfe Kanten an den Schneidflächen entschärft werden.

Die vorliegende Erfindung stellt auch ein Vorheizelement, bevorzugt ein Automobilabgasvorheizelement, und einen chemischen Katalysator bereit, das/der ein durch das erfindungsgemäße Verfahren hergestelltes Bauteil beziehungsweise Flachelement umfasst.

Die vorliegende Erfindung stellt auch eine Vorrichtung zum Entfernen von Metall von einer Oberfläche eines additiv gefertigten, metallischen Bauteils unter Verwendung einer Mischung, die eine Säure, vorzugsweise Salzsäure, und ein Oxidationsmittel, vorzugsweise Wasserstoffperoxid, enthält, bereit. Vorzugsweise ist die Vorrichtung zur Durchführung des erfindungsgemäßen Verfahrens geeignet.

Die Vorrichtung umfasst ein Tauchbad oder eine Spritzanlage. In einer Ausführungsform umfasst die Vorrichtung ferner eine Drahtschneidevorrichtung zum Abtrennen mindestens eines Teils von einem additiv gefertigten, metallischen Körper, umfassend eine Drahtschneidevorrichtung zum Drahtschneiden des additiv gefertigten, metallischen Körpers. Vorzugsweise umfasst die Drahtschneidevorrichtung eine Mehrzahl von mit Nuten versehenen Walzen und mindestens einen Draht. Vorzugsweise ist die Drahtschneidevorrichtung geeignet, mindestens zwei Teile, vorzugsweise eine Vielzahl von Teilen, simultan von dem additiv gefertigten, metallischen Körper abzutrennen. Mit anderen Worten, die Drahtschneidevorrichtung ist zum Drahtschneiden, vorzugsweise Multi-Drahtschneiden, geeignet.

Die vorliegende Erfindung gibt auch die Verwendung einer Mischung, die eine Säure, bevorzugt Salzsäure, und ein Oxidationsmittel, bevorzugt Wasserstoffperoxid, enthält, zum Entfernen von Grat und/oder Pulverrückstand von einem additiv gefertigten, metallischen Bauteil, vorzugsweise Flachelement, bevorzugter Flachelement zur Verwendung als Vorheizelement , besonders bevorzugt Flachelement zur Verwendung als Automobilabgasvorheizelement, und/oder Flachelement zur Verwendung als chemischer Katalysator an.

Nachfolgend wird die Erfindung an Hand eines Beispiels erläutert.

Zunächst wird ein metallischer Körper additiv gefertigt, der aus Inconel 625 besteht. Mit anderen Worten, der metallische Körper besteht aus einer Legierung, die folgende Elemente enthält:

| Element | Gew.-% |
|---|---|
| Cr | 20,00 - 23,00 |
| Mo | 8,00 - 10,00 |
| Fe | max. 5,0 |
| Nb + Ta | 3,15 - 4,15 |
| Mn | max. 0,50 |
| Si | max. 0,50 |
| Al | max. 0,40 |
| Ti | max. 0,40 |
| C | max. 0,10 |
| Ni | min. 58* |

| | |
|---|---|
| *wobei der Rest Nickel und unvermeidbare Verunreinigungen sind. | |

Die additive Fertigung erfolgte derart, dass der metallische Körper eine Gitterstruktur aufweist.

Am additiv gefertigten, metallischen Körper wird ein Multi-Drahtschneiden durchgeführt. Hierzu wird der metallische Körper mit einer Opferplatte verklebt.

Beim Multi-Drahtschneiden wird der additiv gefertigte, metallische Körper durch ein Drahtfeld aus nebeneinander geführten Drähten geschnitten. Die Drähte sind dabei mit einer tribologischen Paste benetzt. Es wird bis in die Opferplatte geschnitten. Beim Multi-Drahtschneiden werden zehn Bauteile simultan von dem metallischen Körper abgetrennt. Bei den abgetrennten Bauteilen handelt es sich um metallische Flachelemente. Die Bauteile stellen bei entsprechender Montage Automobilabgasvorheizelemente dar.

Nach dem Drahtschneiden wird die Klebstoffschicht durch heißes Wasser aufgelöst. Durch das Auflösen der Klebstoffschicht in heißem Wasser werden die erhaltenen Bauteile bzw. Flachelemente von der Opferplatte getrennt und können entnommen werden.

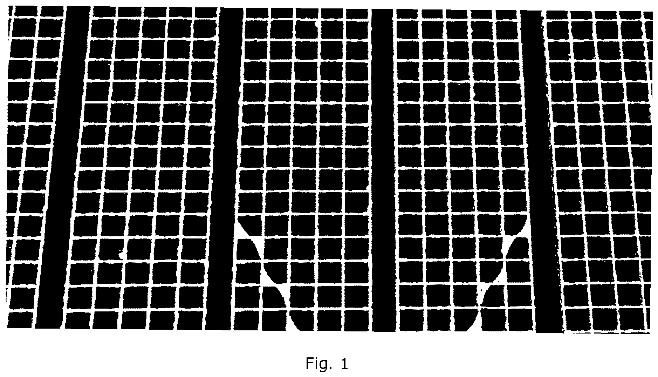

Im Anschluss wird Grat, insbesondere Flittergrat, aus dem Drahtschneiden und Pulverrückstände aus der additiven Fertigung von den Oberflächen der Bauteile entfernt. Das Entfernen erfolgt durch Eintauchen in eine Reinigungsmischung über einen Zeitraum von ca. 1 bis 4 Minuten, je nach Verunreinigungsgrad. Die Reinigungsmischung besteht aus zwei vermischten Volumenteilen, einem Volumenteil konzentrierter Salzsäure (37 Gew.-%) und einem Volumenteil konzentrierten Wasserstoffperoxids (30 Gew.-%). Flittergrat und Pulverrückstand wurde entfernt und scharfe Kanten an den Schneidflächen wurden entschärft, siehe auch Fig. 1.

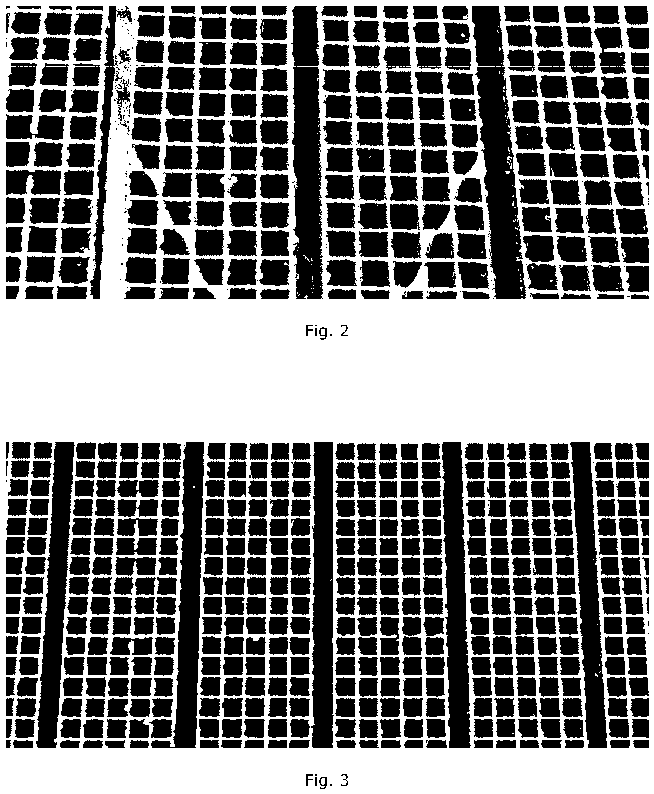

In Vergleichsbeispiel 1 und 2 erfolgte die Reinigung unter Verwendung konzentrierter Salpetersäure (67 Gew.-%) über einen Zeitraum von 4 bzw. 8 Minuten. Flittergrat konnte nicht entfernt werden, siehe auch Fig. 2 (4 Minuten) und Fig. 3 (8 Minuten).

Die Erfindung bietet ein chemisches Reinigungsverfahren, das die Entfernung des Flittergrades und weiterer Anhaftungen in kurzer Zeit bei geringen Kosten und niedriger Gefährdung ermöglicht. Das Reinigungsverfahren erlaubt, das das wirtschaftliche und simultane Trennen von Bauteilen mit komplexer und feiner Struktur in hoher Stückzahl in kurzer Zeit mit hoher Genauigkeit per Drahtschneiden.

## Patentansprüche

1. Verfahren, umfassend
ein Entfernen von Metall von einer Oberfläche eines additiv gefertigten, metallischen Bauteils unter Verwendung einer Mischung, die eine Säure und ein Oxidationsmittel enthält.

2. Verfahren nach Anspruch 1, **dadurch gekennzeichnet, dass** das Entfernen von Metall durch Eintauchen des metallischen Bauteils in die Mischung oder durch ein Bespritzen des metallischen Bauteils mit der Mischung erfolgt.

3. Verfahren nach Anspruch 1 oder 2, **dadurch gekennzeichnet, dass** das Entfernen von Metall in einem Zeitraum von mindestens 2 Sekunden, bevorzugt mindestens 4 Sekunden, weiter bevorzugt mindestens 7 Sekunden, besonders bevorzugt mindestens 10 Sekunden, bis höchstens 10 Minuten, bevorzugt höchstens 4 Minuten, weiter bevorzugt höchstens 1 oder 2 Minuten, erfolgt.

4. Verfahren nach einem der vorherigen Ansprüche, **dadurch gekennzeichnet, dass** das Entfernen von Metall das Entfernen von Grat und/oder Pulverrückstand umfasst.

5. Verfahren nach einem der vorherigen Ansprüche, **dadurch gekennzeichnet, dass** die Oberfläche eine Schneidfläche umfasst, die durch ein Erodieren oder Drahtschneiden, vorzugsweise Multi-Drahtschneiden, eines metallischen Körpers hergestellt wurde, vorzugsweise wobei durch das Entfernen von Metall unter Verwendung der Mischung, die eine Säure und ein Oxidationsmittel enthält, Kanten an der Schneidfläche entschärft werden.

6. Verfahren nach einem der vorherigen Ansprüche, **dadurch gekennzeichnet, dass** das Oxidationsmittel Peroxid, vorzugsweise Wasserstoffperoxid, umfasst.

7. Verfahren nach einem der vorherigen Ansprüche, **dadurch gekennzeichnet, dass** die Säure Salzsäure umfasst.

8. Verfahren nach dem vorherigen Anspruch, **dadurch gekennzeichnet, dass** das Verfahren vor dem Entfernen von Metall von einer Oberfläche des metallischen Bauteils ein Erodieren oder Drahtschneiden, vorzugsweise Multi-Drahtschneiden, eines additiv gefertigten, metallischen Körpers umfasst, um das Bauteil herzustellen.

9. Verfahren nach einem der vorherigen Ansprüche, **dadurch gekennzeichnet, dass** das Bauteil ein metallisches Flachelement ist, vorzugsweise zur Verwendung als Vorheizelement und/oder als chemischer Katalysator.

10. Verfahren nach einem der vorherigen Ansprüche, **dadurch gekennzeichnet, dass** das Bauteil und/oder der metallische Körper aus einer Legierung besteht, vorzugsweise wobei der Hauptbestandteil der Legierung bezogen auf Gew.-% Nickel ist.

11. Verfahren nach einem der vorherigen Ansprüche, **dadurch gekennzeichnet, dass** die Mischung 25 Gew.-% bis 85 Gew.-% Wasser enthält und/oder das Verhältnis von Salzsäure:Wasserstoffperoxid bezogen auf Gew.-% 1:2 bis 2:1 beträgt.

12. Verfahren nach einem der vorherigen Ansprüche, **dadurch gekennzeichnet, dass** das Bauteil und/oder der metallische Körper eine Gitterstruktur aufweist.

13. Bauteil, vorzugsweise Flachelement, besonders bevorzugt Flachelement zur Verwendung als ein Vorheizelement und/oder als chemischer Katalysator, wobei das Bauteil durch ein Verfahren nach einem der Ansprüche 1-12 erhältlich ist.

14. Vorrichtung zum Entfernen von Metall von einer Oberfläche eines additiv gefertigten, metallischen Bauteils unter Verwendung einer Mischung, die eine Säure und ein Oxidationsmittel enthält, vorzugsweise zur Durchführung eines Verfahrens nach einem der obigen Verfahrensansprüche, umfassend ein Tauchbad oder eine Spritzanlage.

15. Verwendung einer Mischung, die eine Säure und ein Oxidationsmittel enthält, zum Entfernen von Grat und/oder Pulverrückstand von einem additiv gefertigten, metallischen Bauteil, vorzugsweise Flachelement, vorzugsweise Flachelement zur Verwendung als ein Vorheizelement und/oder als chemischer Katalysator.
